# EUROPÄISCHE PATENTANMELDUNG

(11) **EP 3 513 865 A1**
(43) Veröffentlichungstag der Anmeldung: **24.07.2019**
(21) Anmeldenummer: 19152005.5
(22) Anmeldetag: 16.01.2019
(51) Int. Cl.: B01D 53/72, B01D 53/75, B01D 53/78

(54) **VORRICHTUNG ZUR REINIGUNG VON MIT STAUB UND ORGANISCHEN ALS AUCH ANORGANISCHEN VERBINDUNGEN BELASTETEN ABGASEN AUS DER HOLZVERARBEITENDEN INDUSTRIE**

(30) Priorität: 19.01.2018 AT 5000818 U
(71) Anmelder: Scheuch GmbH, 4971 Aurolzmünster (AT)
(72) Erfinder: ALTMANN, Erwin, 4774 St. Marienkirchen bei Schärding (AT)
(74) Vertreter: Sonn & Partner Patentanwälte

(57) **Zusammenfassung**

Die Erfindung betrifft eine Vorrichtung (1) zur Reinigung von mit Staub und organischen als auch anorganischen Verbindungen belasteten Abgasen (A) aus der holzverarbeitenden Industrie, mit einer durch einen Wäscher (3) und ein Nasselektrofilter (4) gebildeten Vorreinigungsstufe (2) mit einem ersten Wasserkreislauf (5) und einer nachgeschalteten zweiten Reinigungsstufe (6) mit einem zweiten Wasserkreislauf (7). Zur Veerbesserung der Reinigungswirkung insbesondere in Bezug auf organische Verbindungen auch bei höheren Abgastemperaturen ist die zweite Reinigungsstufe (6) durch einen Wäscher (8) mit einer Zuführung (9) von Additiven (10) zur Abscheidung von organischen und anorganischen Schadstoffen aus dem Abgas (A) gebildet.

## Beschreibung

Die Erfindung betrifft eine Vorrichtung zur Reinigung von mit Staub und organischen als auch anorganischen Verbindungen belasteten Abgasen aus der holzverarbeitenden Industrie, mit einer durch einen Wäscher und ein Nasselektrofilter gebildeten Vorreinigungsstufe mit einem ersten Wasserkreislauf und einer nachgeschalteten zweiten Reinigungsstufe mit einem zweiten Wasserkreislauf.

Bei der Verarbeitung von Holz, vor allem bei gleichzeitiger Einwirkung von erhöhten Temperaturen, wie es bei der Trocknung von Holz, der Pellets-Herstellung, der Trocknung von teilweise beleimten Holzfasern, dem Pressen von Fasern mit Additiven zur Herstellung von Holzfaserdämmstoffen oder Faserplatten, der Trocknung von Spänen, dem Pressen von Spänen mit Additiven zur Herstellung von Spanplatten, der Trocknung von sog. Strands, dem Pressen von Strands mit Additiven zur Herstellung von OSB (Oriented Strand Board)-Platten, der Herstellung von Sperrholzplatten und dergl. der Fall ist, entstehen mit Staub und organischen als auch anorganischen Verbindungen belastete Abgase.

Zur Reinigung der Abgase aus solchen Prozessen werden häufig Nasselektrofilter mit integrierter Quench- und Wäscherstufe zur Gassättigung, Kühlung und anschließender Reduktion von Staub und Aerosolen eingesetzt. Bei geringen Anforderungen kann mitunter auch ein einfacher Wäscher zum Einsatz kommen.

Beispielsweise beschreibt die EP 1 328 332 B1 eine Vorrichtung zur Reinigung von Abgasen, bestehend aus einer Vorreinigungsstufe und einem Biowäscher, zur Reduktion organischer Schadstoffe. Biowäscher weisen den Nachteil auf, dass sie nur bis zu einem Temperaturbereich von ca. 50°C einsetzbar sind. Bei Taupunkttemperaturen des Abgases oberhalb von 55°C oder 60°C steigt der Aufwand zur Kühlung derart, dass anderen Reinigungsverfahren der Vorzug zugeben ist.

Die Aufgabe der vorliegenden Erfindung besteht in der Schaffung einer oben genannten Vorrichtung zur Reinigung von Abgasen aus der holzverarbeitenden Industrie mit der auch bei erhöhten Abgastemperaturen oberhalb von 50°C optimale Reinigungseigenschaften, also die Entfernung von Staub vor allem aber auch von niedermolekularen und hochmolekularen organischen Verbindungen, dauerhaft und zuverlässig erzielbar ist. Nachteile bekannter Vorrichtungen sollen vermieden oder zumindest reduziert werden.

Gelöst wird die Aufgabe dadurch, dass die zweite Reinigungsstufe durch einen Wäscher mit einer Zuführung von Additiven zur Abscheidung von organischen und anorganischen Schadstoffen aus dem Abgas gebildet ist. Durch die Kombination einer durch einen Wäscher und ein Nasselektrofilter gebildeten Vorreinigungsstufe mit einer Nachreinigungsstufe, welche durch einen chemischen Wäscher mit einer Additivzuführung gebildet ist, werden optimale Reinigungswerte auch bei höheren Abgastemperaturen erzielt. Die Vorreinigungsstufe dient primär der Reduktion von Staub aber auch der Vorabscheidung und Reduktion von abscheidbaren Abgasinhaltsstoffen, sowohl wasserlöslichen als auch wasserunlöslichen Verbindungen. Durch die Verwendung eines Additivs in der zweiten Reinigungsstufe und allenfalls auch der Vorreinigungsstufe kann eine Abscheidung und Reduktion bestimmter Schadstoffe, vor allem schwer bzw. nicht wasserlöslicher Schadstoffe, erzielt werden. Wasserunlösliche oder schwerwasserlösliche organische Verbindungen können auch durch eine Kühlung der Abgase und der daraus teilweise resultierenden Kondensierung von organischen Verbindungen, welche anschließend aerosolförmig vorliegen, ähnlich wie Staub abgeschieden werden.

Gemäß einem weiteren Merkmal der Erfindung kann der Wäscher der zweiten Reinigungsstufe auch mit zumindest einem Nasselektrofilter kombiniert sein. Dadurch wird die Abscheidung von durch Kondensation nach der ersten Reinigungsstufe neu entstehenden Aerosolen erreicht, wenn das Abgas zwischen der ersten und zweiten Reinigungsstufe gekühlt wird.

Vorteilhafterweise ist als Additiv Wasserstoffperoxid vorgesehen. Durch den Einsatz von Wasserstoffperoxid können organische Kohlenstoffverbindungen aus den Abgasen mit relativ geringem Aufwand abgebaut werden.

Alternativ oder zusätzlich können als Additiv auch anorganische Salze vorgesehen sein. Der Einsatz von anorganischen Salzen ermöglicht die Entfernung, Zerstörung oder Umwandlung organischer Schadstoffe aus dem Prozesswasser um das Aufnahmevermögen für diese Schadstoffe im Dauerbetrieb der Vorrichtung aufrecht erhalten zu können.

Weiters können als Additiv organische Lösemittel, beispielsweise Silikonöle, Phtalate oder dgl. vorgesehen sein. Durch den zusätzlichen oder alternativen Einsatz organischer Lösemittel können organische, schwer wasserlösliche Verbindungen bzw. Schadstoffe aus den Abgasen gezielt von der Waschflüssigkeit aufgenommen und aus dem Abgasen entfernt werden.

Die Vorreinigungsstufe und die zweite Reinigungsstufe können nebeneinander angeordnet sein. Bei einer derartigen Anordnung werden die beiden Stufen als eigenständige Anlagen ausgeführt und über einer gemeinsame Leitung gasseitig verbunden. Vorteilhaft dabei ist die Trennung der Stufen, nachteilig jedoch der erhöhte Platzbedarf zumindest in der horizontalen Ebene.

Wenn die zweite Reinigungsstufe über der Vorreinigungsstufe angeordnet ist, und dazwischen ein Wassertrennboden angeordnet ist, wird weniger Grundfläche benötigt. Dafür ist der apparative Aufwand durch den notwendigen Wassertrennboden etwas höher. Der Wassertrennboden bzw. die Trennvorrichtung zwischen den beiden Reinigungsstufen muss eine gleichmäßige Verteilung der Abgase sicherstellen und so gestaltet sein, dass dadurch nur ein geringer zusätzlicher Strömungswiderstand für die Gasphase gebildet wird. Der Wassertrennboden bzw. die Trennvorrichtung darf die Überwindung des Prozesswassers von einer Stufe zur anderen Stufe nicht zulassen.

Eine Zuführung für Additive kann im ersten Wasserkreislauf vorgesehen sein. Dadurch kann eine gezielte Reinigung der Abgase von bestimmten Schadstoffen durch die Verwendung bestimmter Additive bereits in der Vorreinigungsstufe zusammen mit der Reinigung der Abgase von Staub erfolgen.

Wenn im ersten Wasserkreislauf und bzw. oder zweiten Wasserkreislauf eine Kühleinrichtung, beispielsweise ein Wärmetauscher, vorgesehen ist, kann eine aktive Kühlung der Abgase vorgenommen werden. Dadurch steigt zwar der apparative Aufwand, es können jedoch durch die daraus teilweise resultierende Kondensierung von organischen Verbindungen, welche anschließend aerosolförmig vorliegen, diese Verbindungen ähnlich wie Staubpartikel auf dem Abgasstrom abgeschieden werden. Somit kann durch derartige Maßnahmen die Reinigung bestimmter Schadstoffe aus den Abgasen verbessert werden.

Die zweite Reinigungsstufe kann im Gegenstrom oder im Gleichstrom vom Abgas durchströmbar sein. Im Gegenstrom wird die zweite Reinigungsstufe von unten nach oben mit den Abgasen durchströmt, im Gleichstrom von oben nach unten.

Nach der zweiten Reinigungsstufe kann in an sich bekannter Weise ein Tropfenabscheider angeordnet sein, um das Mitreißen von Tröpfchen mit den Reingasen verhindern zu können.

Wenn der erste Wasserkreislauf und der zweite Wasserkreislauf miteinander verbunden ist, kann der apparative Aufwand reduziert und der Verbrauch an Prozesswasser reduziert werden.

Die vorliegende Erfindung wird anhand der beigefügten Zeichnungen näher erläutert. Darin zeigen:
- Fig. 1: ein Blockdiagramm einer Ausführungsform einer Vorrichtung zur Reinigung von Abgasen aus der holzverarbeitenden Industrie;
- Fig. 2: ein Prinzip einer Reinigungsvorrichtung mit nebeneinander angeordneten Reinigungsstufen; und
- Fig. 3: eine Prinzipdarstellung einer Reinigungsvorrichtung der gegenständlichen Art mit übereinander angeordneten Reinigungsstufen.

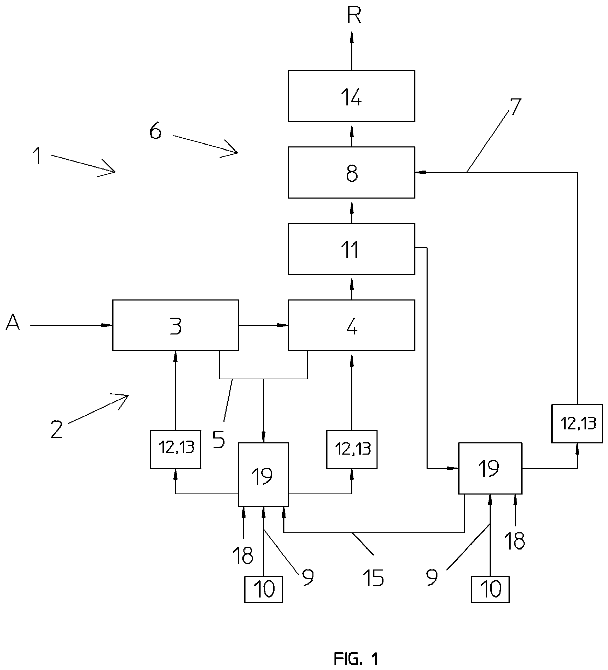

In Fig. 1 ist die Vorrichtung 1 zur Reinigung von Abgasen A aus der holzverarbeitenden Industrie dargestellt. Die Vorrichtung 1 beinhaltet eine Vorreinigungsstufe 2, welche durch einen Wäscher 3 und einen Nasselektrofilter 4 gebildet ist. Das Prozesswasser der Vorreinigungsstufe 2 wird in einem ersten Wasserkreislauf 5 geführt. Die durch die Vorreinigungsstufe 2 vorgereinigte Abluft wird in einer zweiten Reinigungsstufe 6 von organischen und anorganischen Verbindungen gereinigt. Die zweite Reinigungsstufe 6 ist durch einen Wäscher 8 oder eine Kombination aus Wäscher 8 mit Nasselektrofilter (nicht dargestellt) gebildet, dessen Prozesswasser in einem zweiten Wasserkreislauf 7 geführt wird.

Der erste Wasserkreislauf 5 und zweite Wasserkreislauf 7 steht mit einem Prozesswassertank 19 in Verbindung. Über eine Zuführung 9 können Additive 10 zur Abscheidung von organischen Schadstoffen aus dem Abgas A zugeführt werden. Für die Dosierung weiterer Additive kann eine weitere Additivzuleitung 18 vorgesehen sein. Bei der Anordnung der Vorreinigungsstufe 2 und zweiten Reinigungsstufe 6 übereinander in einer turmartigen Bauweise, ist es erforderlich den ersten Wasserkreislauf 5 vom zweiten Wasserkreislauf 7 zu trennen, was beispielsweise über einen Wassertrennboden 11 oder eine ähnliche Trennvorrichtung geschehen kann.

Zur Entfernung von Tropfen aus dem Reingas R vor dem Austritt in die Atmosphäre, kann ein Tropfenabscheider 14 am Ausgang der Reinigungsvorrichtung 1 angeordnet werden.

Zur allfälligen Kühlung können im ersten Wasserkreislauf 5 und bzw. oder zweiten Wasserkreislauf 7 Kühleinrichtungen 12, beispielsweise Wärmetauscher 13, angeordnet sein. Über eine Verbindungsleitung 15 können der erste Wasserkreislauf 5 und der zweite Wasserkreislauf 7 der Reinigungsvorrichtung 1 miteinander verbunden werden.

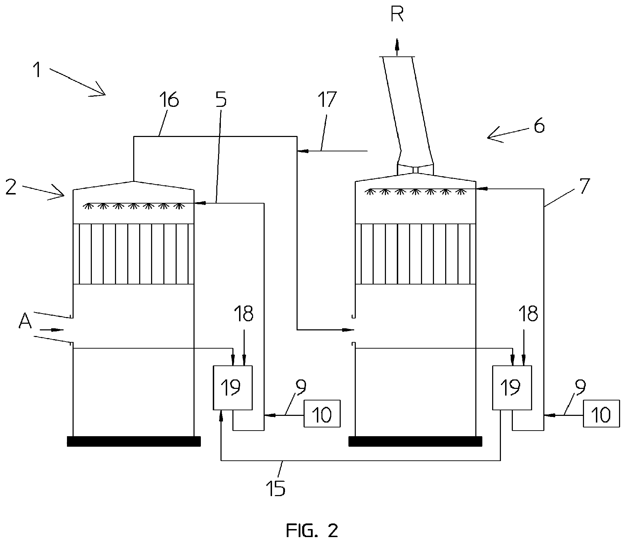

Fig. 2 zeigt eine Prinzipdarstellung einer Reinigungsvorrichtung 1 zur Reinigung von Abgasen A aus der holzverarbeitenden Industrie, wobei die Vorreinigungsstufe 2 und die zweite Reinigungsstufe 6 nebeneinander angeordnet sind. Das Prozesswasser der Vorreinigungsstufe 2 wird im ersten Wasserkreislauf 5 geführt. Im ersten Wasserkreislauf 5 ist wiederum ein Prozesswassertank 19 angeordnet. In diesen ersten Wasserkreislauf 5 kann über eine Zuleitung 9 ein ausgewähltes Additiv (nicht dargestellt) zugeführt werden. Am Prozesswassertank 19 kann eine weitere Additivzuleitung 18 angeordnet sein, um dem Prozesswasser weitere Additive zuführen zu können.

Das Prozesswasser für die zweite Reinigungsstufe 6 wird im zweiten Wasserkreislauf 7 geführt, dem über eine Zuleitung 9 spezielle Additive (nicht dargestellt) zugeführt werden. Ein Prozesswassertank 19 speist den zweiten Wasserkreislauf 7 mit dem erforderlichen Prozesswasser. Über eine allfällige Additivzuleitung 18 können dem Wasserkreislauf 7 weitere Additive zugeführt werden. Die Verbindung zwischen der Vorreinigungsstufe 2 und der zweiten Reinigungsstufe 6 erfolgt über eine Verbindungsleitung 16. Dieser kann zur Kühlung der vorgereinigten Abgase A über eine Zuleitung 17 Zuluft zugeführt werden.

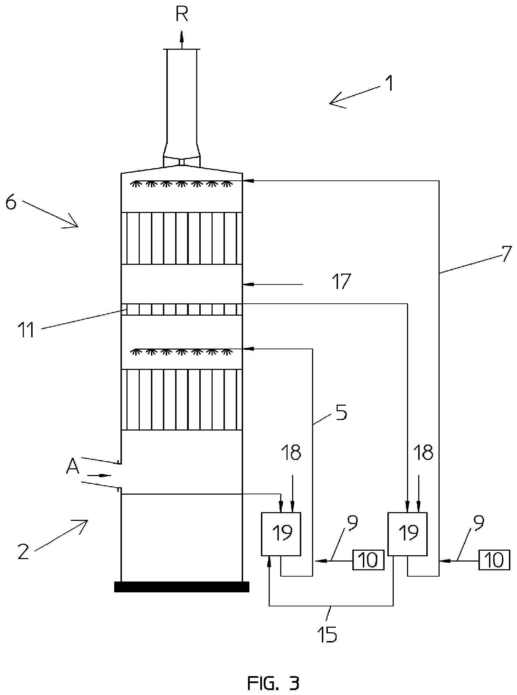

Fig. 3 zeigt eine alternative Ausführungsform der Reinigungsvorrichtung 1 mit übereinander angeordneter Vorreinigungsstufe 2 und nachfolgender zweiter Reinigungsstufe 6. Bei einer derartigen turmartigen Anordnung der zumindest zwei Reinigungsstufen 2, 6 ist die Anordnung eines Wassertrennbodens 11 erforderlich zur Trennung des ersten Wasserkreislaufs 5 und zweiten Wasserkreislaufs 7.

Die gegenständliche Reinigungsvorrichtung zeichnet sich durch eine Kombination einer aus Wäscher- und Nasselektrofilter bestehenden Vorreinigungsstufe mit einer nachfolgenden Reinigungsstufe, welche durch einen chemischen Wäscher oder eine Kombination von Wäscher mit Nasselektrofilter gebildet ist, wobei zumindest ein Additiv verwendet wird, aus. Der erste Wasserkreislauf für die Vorreinigungsstufe ist vorteilhafterweise vom zweiten Wasserkreislauf der zweiten Reinigungsstufe getrennt, wodurch der zweite, separate Wasserkreislauf weniger belastet ist. Die Abwasserführung erfolgt von der zweiten Reinigungsstufe in die Vorreinigungsstufe.

Der Wasserbedarf des ersten Wasserkreislaufes kann aus dem zweiten Wasserkreislauf gedeckt werden. Um die Wassermenge des Prozesswassers im zweiten Wasserkreislauf konstant zu halten wird Prozesswasser mit annähernd gleichen oder gleicher Frischwasserqualität oder enthärtetes oder entsalztes Wasser nachgespeist.

Durch die allfällige Kühlung des Prozesswassers in der zweiten Reinigungsstufe aber auch der Vorreinigungsstufe, kann Kondensat generiert werden, wodurch die Menge des verwendeten Prozesswassers reduziert werden kann. Zusätzlich bewirkt die Kühlung auch eine Verbesserung des Abscheidegrades, es wird jedoch der apparative Aufwand entsprechend erhöht.

Die Dosierung zumindest eines Additivs erfolgt zumindest in der zweiten Reinigungsstufe, allenfalls auch in der Vorreinigungsstufe.

Durch die Verwendung eines chemischen Wäschers im Unterschied zu einem Biowäscher können Abgase mit höheren Temperaturen, d.h. auch über 50°C gereinigt werden.

Die gegenständliche Reinigungsvorrichtung erlaubt eine optimale Abscheidung der Schadstoffe aus den Abgasen der holzverarbeitenden Industrie, insbesondere können Abscheidegrade organischer Schadstoffe von über 50% allenfalls über 75% bei entsprechender Auslegung der Vorrichtung erzielt werden. Die Reinigungsvorrichtung zeichnet sich durch eine kompakte Bauweise, insbesondere bei einer übereinander angeordneten Variante aus. Eine Nachrüstung bestehender Anlagen ist relativ einfach und kostengünstig möglich.

## Patentansprüche

1. Vorrichtung (1) zur Reinigung von mit Staub und organischen als auch anorganischen Verbindungen belasteten Abgasen (A) aus der holzverarbeitenden Industrie, mit einer durch einen Wäscher (3) und ein Nasselektrofilter (4) gebildeten Vorreinigungsstufe (2) mit einem ersten Wasserkreislauf (5) und einer nachgeschalteten zweiten Reinigungsstufe (6) mit einem zweiten Wasserkreislauf (7), **dadurch gekennzeichnet, dass** die zweite Reinigungsstufe (6) durch einen Wäscher (8) mit einer Zuführung (9) von Additiven (10) zur Abscheidung von organischen und anorganischen Schadstoffen aus dem Abgas (A) gebildet ist.

2. Reinigungsvorrichtung (1) nach Anspruch 1, **dadurch gekennzeichnet, dass** der Wäscher (8) der zweiten Reinigungsstufe (6) mit zumindest einem Nasselektrofilter kombiniert ist.

3. Reinigungsvorrichtung (1) nach Anspruch 1 oder 2, **dadurch gekennzeichnet, dass** als Additiv (10) Wasserstoffperoxid vorgesehen ist.

4. Reinigungsvorrichtung (1) nach einem der Ansprüche 1 bis 3, **dadurch gekennzeichnet, dass** als Additiv (10) anorganische Salze vorgesehen sind.

5. Reinigungsvorrichtung (1) nach einem der Ansprüche 1 bis 4, **dadurch gekennzeichnet, dass** als Additiv (10) organische Lösemittel, beispielsweise Silikonöle, Phalate oder dgl. vorgesehen sind.

6. Reinigungsvorrichtung (1) nach einem der Ansprüche 1 bis 5, **dadurch gekennzeichnet, dass** die Vorreinigungsstufe (2) und die zweite Reinigungsstufe (6) nebeneinander angeordnet sind.

7. Reinigungsvorrichtung (1) nach einem der Ansprüche 1 bis 5, **dadurch gekennzeichnet, dass** die zweite Reinigungsstufe (6) über der Vorreinigungsstufe (2) angeordnet ist, und dazwischen ein Wassertrennboden (11) angeordnet ist.

8. Reinigungsvorrichtung (1) nach einem der Ansprüche 1 bis 7, **dadurch gekennzeichnet, dass** im ersten Wasserkreislauf (5) eine Zuführung (9) für Additive (10) vorgesehen ist.

9. Reinigungsvorrichtung (1) nach einem der Ansprüche 1 bis 8, **dadurch gekennzeichnet, dass** im ersten Wasserkreislauf (5) und bzw. oder zweiten Wasserkreislauf (7) eine Kühleinrichtung (12), beispielsweise ein Wärmetauscher (13), vorgesehen ist.

10. Reinigungsvorrichtung (1) nach einem der Ansprüche 1 bis 9, **dadurch gekennzeichnet, dass** die zweite Reinigungsstufe (6) im Gegenstrom vom Abgas (A) durchströmbar ist.

11. Reinigungsvorrichtung (1) nach einem der Ansprüche 1 bis 9, **dadurch gekennzeichnet, dass** die zweite Reinigungsstufe (6) im Gleichstrom vom Abgas (A) durchströmbar ist.

12. Reinigungsvorrichtung (1) nach einem der Ansprüche 1 bis 11, **dadurch gekennzeichnet, dass** nach der zweiten Reinigungsstufe (6) ein Tropfenabscheider (14) angeordnet ist.

13. Reinigungsvorrichtung (1) nach einem der Ansprüche 1 bis 12, **dadurch gekennzeichnet, dass** der erste Wasserkreislauf (5) und der zweite Wasserkreislauf (7) miteinander verbunden ist.
